# EUROPEAN PATENT APPLICATION

(11) **EP 4 254 082 A1**
(43) Date of publication of application: **04.10.2023**
(21) Application number: 21897692.6
(22) Date of filing: 08.11.2021
(51) Int. Cl.: G04F 5/14, H01S 1/06, H01S 3/00

(54) **SLOW ATOMIC BEAM GENERATOR, PHYSICAL PACKAGE, PHYSICAL PACKAGE FOR OPTICAL GRID CLOCK, PHYSICAL PACKAGE FOR ATOMIC CLOCK, PHYSICAL PACKAGE FOR ATOMIC INTERFEROMETER, PHYSICAL PACKAGE FOR QUANTUM INFORMATION PROCESSING DEVICE, AND PHYSICAL PACKAGE SYSTEM**

(30) Priority: 25.11.2020 JP 2020195372
(71) Applicant: JEOL Ltd., Akishima-shi,, Tokyo 196-8558 (JP); RIKEN, Wako-shi, Saitama 351-0198 (JP)
(72) Inventor: TSUJI, Shigenori, Akishima-shi, Tokyo 196-8558 (JP); TAKAMOTO, Masao, Wako-shi, Saitama 351-0198 (JP); KATORI, Hidetoshi, Wako-shi, Saitama 351-0198 (JP)
(74) Representative: Boult Wade Tennant LLP
(86) International application number: PCT/JP2021/041036
(87) International publication number: WO 2022/113717

(57) **Abstract**

By heating a high-temperature bath (116) with a heater (108), atomic gas is generated in the high-temperature bath (116) from an atomic source. A magneto-optical trap is realized by a laser beam (130) reflected by a right-angled conical mirror (102) and a magnetic field formed by a magnetic field generator (112), and the atomic gas is confined by using the magneto-optical trap and cooled. The-cooled atoms are output from an opening (106) to the outside of a slow atom beam generator (100) by a laser beam (132), which is a push laser beam. A slow atomic beam is thereby formed.

## Description

### TECHNICAL FIELD

The present invention relates to a slow atomic beam generation device, a physics package, a physics package for an optical lattice clock, a physics package for an atomic clock, a physics package for an atom interferometer, a physics package for a quantum information processing device, and a physics package system.

### BACKGROUND

Optical lattice clocks are atomic clocks proposed by KATORI Hidetoshi, who is one of the inventors of the present application. An optical lattice clock confines atoms in an optical lattice formed by laser light, and measures the resonant frequency in a visible light range. Accordingly, optical lattice clocks can achieve 18-digit accuracy measurement, which surpasses the accuracies of current cesium clocks. Optical lattice clocks have been eagerly researched and developed not only by the group including the inventors but also by various groups inside and outside of this country, and have been developed as next-generation atomic clocks.

The latest technology of optical lattice clocks is described in the following Patent Documents 1 to 3, for example. Patent Document 1 describes that a one-dimensional moving optical lattice is formed in an optical waveguide having a hollow pathway. Patent Document 2 describes an aspect of setting an effective magic frequency. Patent Document 3 describes a radiation shield that reduces adverse effects of blackbody radiation emitted from surrounding walls.

The optical lattice clock measures time with high accuracy. Accordingly, the optical lattice clock can detect an elevation difference of 1 cm on the Earth based on the general relativistic effect due to the gravity, as a deviation in temporal progress. Accordingly, if the optical lattice clock is made miniaturized, transportable and usable in a field outside of a laboratory, it would be applicable to new geodetic technologies, such as underground resource exploration, and detection of underground cavities and magma chambers. Optical lattice clocks are mass-produced, and installed at many locations, and temporal variation in gravitational potential is continuously monitored, which allows applications that include detection of diastrophism, and spatial mapping of the gravitational field. Thus, optical lattice clocks are expected to contribute to society as a new fundamental technology beyond the bounds of highly accurate time measurement.

Incidentally, in recent years, an accurate measurement device using slow atoms cooled to the vicinity of absolute zero by means of laser light has been under development. It is important for such an accurate measurement device to generate a slow atomic beam efficiently at high flow rate.

A device conceivable to use a slow atomic beam generation device may be an optical lattice clock described above. In recent years, neutral atoms cooled to an extremely low temperature attract attention as qubits of a basic unit of quantum information.. A quantum computer that uses cooled atoms as qubits is less affected by the surrounding environment than that in a case of using other qubits, such as electronic spins and nuclear spins in a solid or liquid. Accordingly, quantum information can be held for a long time period. Furthermore, advantages of increase in the number of qubits using the Bose-Einstein condensation technology is expected.

A typical example of a slow atomic beam generation device is a device composed of an atomic beam oven, a Zeeman slower, and a three-dimensional magneto-optical trap.

The atomic beam oven generates an atomic beam with improved collimation through a nozzle by thermal sublimation as well as light induced deposition. The average velocity of the generated atomic beam follows the Maxwell-Boltzmann distribution characterized by temperature, and is several hundred meter per second in a typical experimental condition.

The Zeeman slower forms a gradient magnetic field with respect to a direction in which the atomic beam travels, and then irradiates the atomic beam with laser light, thus decelerating the atomic beam by the radiation pressure.

For example, the three-dimensional magneto-optical trap forms a quadrupole magnetic field around the center of the trap region, and then irradiates the center with laser light in six directions, thereby trapping atoms. However, such a three-dimensional magneto-optical trap is required to use a configuration for emitting laser light in at least six directions, and a configuration for forming a gradient magnetic field reaching a relatively wide space. Such a configuration prevents miniaturization and power saving of the device.

As another device, a device is proposed in which a configuration including an atomic beam oven and a three-dimensional magneto-optical trap is combined with a two-dimensional magneto-optical trap. For example, the two-dimensional magneto-optical trap forms a two-dimensional quadrupole magnetic field around the center of the trap region, and then irradiates the center with laser light in four directions, thereby trapping atoms. The trapped atoms are drawn by push laser light, and are transported to the three-dimensional magneto-optical trap.

Patent Document 4 describes a two-dimensional magneto-optical trap device, including 3+n pairs of counter-propagating trapping laser beams, to operate the MOT at a high repetition rate and a high duty cycle.

In view of reducing the number of incident laser beams and simplifying the configuration of a device, a device to be described below is proposed.

Patent Document 5 describes a slow atomic beam generation device that includes: an atomic gas generator; and an atom cooling device that is adjacent to the atomic gas generator, includes a conical mirror and realizes the two-dimensional magneto-optical trap method.

Patent Document 6 describes a slow atomic beam generation device that includes: an atomic gas generator; and an atom cooling device that is adjacent to the atomic gas generator, includes a quadrangular pyramid mirror and realizes the two-dimensional magneto-optical trap method.

These atomic beam generation devices are devices that are for alkali metals (group 1 element) as atoms. Accordingly, it is difficult to obtain a sufficient atomic flow rate with a low vapor pressure.

Here, Table 1 shows metal elements, and respective temperatures (Celsius) at which the vapor pressure is 10⁻⁵ Pa.

**[Table 1]**

| group of the periodic table | elements | T(°C) at vapor pressure of 10⁻⁵ Pa |
|---|---|---|
| Group 1 | K | 39 |
| | Rb | 16 |
| | Cs | -2 |
| Group 2 | Mg | 210 |
| | Ca | 313 |
| | Sr | 270 |
| | Ba | 304 |
| Group 12 | Zn | 149 |
| | Cd | 93 |
| | Yb | 230 |
| | Al | 738 |
| | Ag | 619 |

| | | |
|---|---|---|
| Elements, and respective temperatures with a vapor pressure of 10⁻⁵ Pa | | |

Cesium and rubidium, which are alkali metals, have low temperatures for production of a gas phase, and high vapor pressures even at a room temperature (25°C). Accordingly, by operating an atomic gas generator under a very high vacuum at a room temperature, the state of atoms can transition from the solid phase to the gas phase without using a heating device.

However, strontium and the like, which are group 2 elements, and ytterbium and the like have relatively high temperatures for production of a gas phase, and low vapor pressures at a room temperature. Consequently, it is difficult for conventional slow atomic beam generation devices dedicated to group 1 elements to achieve sufficient atomic flow rates of elements having low vapor pressures.

Patent Document 7 describes a slow atomic beam generation device that includes an atom cooling device and an atom cell provided with a heating device. In the slow atomic beam generation device, gaseous atoms are generated by the heating device heating an alkaline earth metal, such as strontium. Optical windows for allowing laser light to enter the inside of the slow atomic beam generation device from the outside are made of sapphire or high-alumina-content silicate glass. Thus, heated strontium or strontium gaseous atoms have corrosion resistance property.

### CITATION LIST

### PATENT LITERATURE

Patent Document 1: JP 6206973 B
Patent Document 2: JP 2018-510494 A
Patent Document 3: JP 2019-129166 A
Patent Document 4: USP 8,835,833
Patent Document 5: USP 6,303,928
Patent Document 6: USP 8,373,112
Patent Document 7: USP 9,117,563

### SUMMARY

### TECHNICAL PROBLEM

In the slow atomic beam generation device described in the aforementioned Patent Document 7, four side surfaces or six side surfaces (all the side surfaces) of the device are made up of optical windows. Consequently, through the optical windows, thermal radiation from the heated slow atomic beam generation device to the outside increases. As a result, the increase serves as a cause of heat release, or as a disturbance to accurate measurement.

An object of the present invention is to provide a small-sized device of generating an atomic beam at a low velocity and high flow rate for atoms having low saturated vapor pressure at room temperature.

### SOLUTION TO PROBLEM

An aspect of the present invention is a slow atomic beam generation device, including: a high-temperature bath that includes an atom source, an optical window which is provided at one end and through which laser light is allowed to pass, and a right-angle conical mirror that is provided at another end, has an opening at an apex, and reflects, toward the one end, the laser light having entered through the optical window, by a portion other than the opening; a heater that generates atomic gas in the high-temperature bath from the atom source, by heating the high-temperature bath; a magnetic field generation device that generates a magnetic field in an area where the laser light reflected by the right-angle conical mirror intersects; and a thermal radiation shield that covers the portion of the high-temperature bath other than the opening, wherein the slow atomic beam generation device forms an atomic beam from the atomic gas through use of a magneto-optical trap realized by the laser light and the magnetic field, and emits the atomic beam through the opening to an outside.

According to the configuration described above, even in a case of using an element that has a low saturated vapor pressure at a room temperature (e.g., 27°C) and cannot obtain sufficient atomic gas, sufficient atomic gas can be obtained by heating the high-temperature bath by the heater. The magneto-optical trap is realized by the laser light reflected by the right-angle conical mirror and by the magnetic field formed by the magnetic field generation device, thus trapping and cooling atoms. The cooled atoms are output to the outside of the slow atomic beam generation device by push laser light, for example. Accordingly, a slow atomic beam is formed. Use of the thermal radiation shield can prevent thermal radiation to the outside of the slow atomic beam generation device even when the high-temperature bath is heated by the heater. As a result, degradation of measurement accuracy caused by ambient electric field due to blackbody radiation can be suppressed.

The atom source described above may be strontium. Use of the configuration described above can generate a slow atomic beam of strontium. Strontium is only one example. As another example, ytterbium may be used. The other element that has too low vapor pressure at a room temperature to obtain sufficient atomic beam flux may be used. The heater temperature may be changed depending on the element to be used. For example, by setting the setting temperature of the heater to a temperature at which the atomic gas of the element to be used can be obtained, sufficient atomic gas can be obtained with respect to such an element.

The magnetic field generation device may be disposed in a space enclosed by the thermal radiation shield. According to this configuration, even in a case where coils are adopted as the magnetic field generation device, thermal radiation from the coils to the outside can be suppressed.

The magnetic field generation device may be disposed outside of the space enclosed by the thermal radiation shield. In this case, through use of the permanent magnets instead of the coils as the magnetic field generation device, a thermal radiation shield for suppressing thermal radiation from the permanent magnet are not required to be further provided.

The slow atomic beam generation device may further include a cold filter optical window provided on an optical path of the laser light entering the optical window, between the optical window and the right-angle conical mirror. By providing the cold filter optical window, thermal radiation to the outside of the slow atomic beam generation device can be prevented even when the high-temperature bath is heated by the heater.

The coil may serve as both the magnetic field generation device and the heater.

The slow atomic beam generation device may further include a control device that generates a magnetic field for realizing the magneto-optical trap from the coil, and generates heat for heating the high-temperature bath from the coil, by controlling a current flowing through the coil.

The magnetic field generation device may be a permanent magnet that has a cylindrical shape covering the high-temperature bath, and is magnetized in a radial direction.

The magnetic field generation device may be an antisymmetric winding tetracoil made up of total four current bands or an antisymmetric winding coil made up of six or more even number of current bands, the tetracoil or the coil forming an antisymmetric current distribution with respect to the center point.

The slow atomic beam generation device may further include a control device, wherein the high-temperature bath has a 2n-axis-symmetric shape (n is an integer of two or greater), the magnetic field generation device is 2n (n is an integer of two or greater) rectangular-shaped or saddle-shaped coils that have an identical shape and are provided on side surfaces enclosing 2n rotationally symmetric axes of the high-temperature bath, and the control device generates a two-dimensional quadrupole magnetic field from the magnetic field generation device, by flowing currents of coils which face each other and between which the 2n rotationally symmetric axes intervene, in directions opposite to each other.

The high-temperature bath may have a 2n-axis-symmetric shape (n is an integer of two or greater), the magnetic field generation device may be 2n (n is an integer of two or greater) quadrangular prism-shaped or arc prism-shaped permanent magnets that have an identical shape and are provided on side surfaces enclosing 2n rotationally symmetric axes of the high-temperature bath, and the permanent magnets may be magnetized in angular directions with respect to the symmetric axes, and magnetization directions of the permanent magnets facing each other with intervention of the 2n rotationally symmetric axes may be opposite to each other, forming a two-dimensional quadrupole magnetic field.

The slow atomic beam generation device may further include a detachable vacuum-_ tight window, wherein the vacuum- tight window is detached, and the atom source is installed in the high-temperature bath, or the atom source is taken out from the high-temperature bath.

The high-temperature bath and the right-angle conical mirror may be made of aluminum, a metal coated with aluminum, or an insulator coated with aluminum.

The high-temperature bath and the right-angle conical mirror may be made of silver, a metal coated with silver, or an insulator coated with silver.

The high-temperature bath and the right-angle conical mirror may be made of glass coated with an optical multi-layer film.

The optical window may be made of sapphire.

An aspect of the present invention is physics package that includes: the slow atomic beam generation device described above; and a vacuum chamber that encloses a clock transition space where atoms are arranged.

An aspect of the present invention is a physics package for an optical lattice clock, the package including the physics package described above.

An aspect of the present invention is a physics package for an atomic clock, the package including the physics package described above.

An aspect of the present invention is a physics package for an atom interferometer, the package including the physics package described above.

An aspect of the present invention is a physics package for a quantum information processing device for atoms or ionized atoms, the package including the physics package described above.

An aspect of the present invention is a physics package system that includes: the physics package described above; and a control device that controls operation of the physics package.

### ADVANTAGEOUS EFFECT OF INVENTION

According to the present invention, the small-sized device of generating an atomic beam at a low velocity and high flow rate for atoms having low saturated vapor pressure at room temperature can be provided.

### BRIEF DESCRIPTION OF DRAWINGS

[FIG. 1] FIG. 1 is a block diagram showing an overall configuration of an optical lattice clock according to an embodiment.
[FIG. 2] FIG. 2 schematically shows a configuration of a slow atomic beam generation device according to a first embodiment.
[FIG. 3] FIG. 3 schematically shows the configuration of the slow atomic beam generation device according to the first embodiment.
[FIG. 4] FIG. 4 schematically shows the configuration of the slow atomic beam generation device according to the first embodiment.
[FIG. 5] FIG. 5 schematically shows a configuration of a slow atomic beam generation device according to a second embodiment.
[FIG. 6] FIG. 6 schematically shows a configuration of a slow atomic beam generation device according to a third embodiment.
[FIG. 7] FIG. 7 schematically shows a configuration of a slow atomic beam generation device according to a fourth embodiment.
[FIG. 8] FIG. 8 is a perspective view of a ceramic bobbin.
[FIG. 9] FIG. 9 is a perspective view of a heater that also serves as a magnetic field generation device.
[FIG. 10] FIG. 10 is a perspective view of a heater that also serves as a magnetic field generation device.
[FIG. 11] FIG. 11 shows coils that constitute a heater that also serves as a magnetic field generation device.
[FIG. 12] FIG. 12 shows coils that constitute a heater that also serves as a magnetic field generation device.
[FIG. 13] FIG. 13 shows coils that constitute a heater that also serves as a magnetic field generation device.
[FIG. 14] FIG. 14 is a graph showing an attained temperature of the high-temperature bath with respect to the height of the slow atomic beam generation device.

### DESCRIPTION OF EMBODIMENTS

### <Configuration of optical lattice clock>

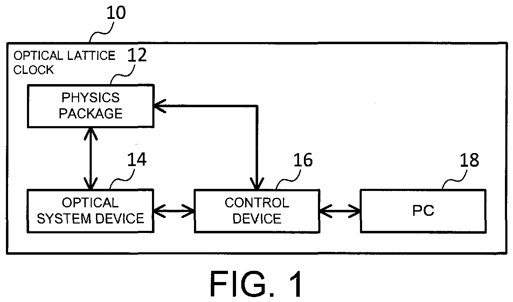

By reference to FIG. 1, a schematic configuration of an optical lattice clock 10 that uses a slow atomic beam generation device according to this embodiment is described. FIG. 1 is a block diagram showing the overall configuration of the optical lattice clock 10. Here, description is made with an example of the optical lattice clock 10 as one example of a device that uses the slow atomic beam generation device. It is a matter of course that the slow atomic beam generation device according to this embodiment may be used for a device other than the optical lattice clock 10.

The optical lattice clock 10 includes, for example, a physics package 12, an optical system device 14, a control device 16, and a PC (Personal Computer) 18.

The physics package 12 is a device that traps an atom population, confines them in an optical lattice, and causes clock transitions. The optical system device 14 is a device provided with optical devices that include a laser light source for trapping atoms, a laser light source for clock transition excitation, and a laser frequency control device. The optical system device 14 not only transmits the laser light to the physics package 12, but also performs processes of receiving a fluorescent signal emitted by the atom population in the physics package 12, converting it into an electric signal, and feeding back the signal to the laser light source so as to match the resonant frequency of the atoms. The control device 16 is a device that controls the physics package 12 and the optical system device 14. For example, the control device 16 performs operation control of the physics package 12, operation control of the optical system device 14, and analysis processes, such as frequency analysis of clock transition obtained by measurement. The physics package 12, the optical system device 14 and the control device 16 cooperate with each other, thus realizing the function of the optical lattice clock 10.

The PC 18 is a general-purpose computer that includes a processor and a memory. Software is executed by hardware that includes the processor and the memory, thus realizing the function of the PC 18. An application program for controlling the optical lattice clock 10 is installed in the PC 18. The PC 18 is connected to the control device 16, and not only controls the control device 16, but also entirely controls the optical lattice clock 10, which includes the physics package 12 and the optical system device 14. The PC 18 provides an UI (User Interface) of the optical lattice clock 10. A user can perform activation of the optical lattice clock 10, time measurement, result confirmation and the like, through the PC 18.

Note that a system that includes the physics package 12 and a configuration required to control the physics package 12 is sometimes called "physics package system". The configuration required for control may be included in the control device 16 or the PC 18, or included in the physics package 12. Part or the entirety of the function of the control device 16 may be included in the physics package 12.

Hereinafter, the slow atomic beam generation device according to this embodiment is described in detail.

### Configuration of slow atomic beam generation device according to first embodiment>

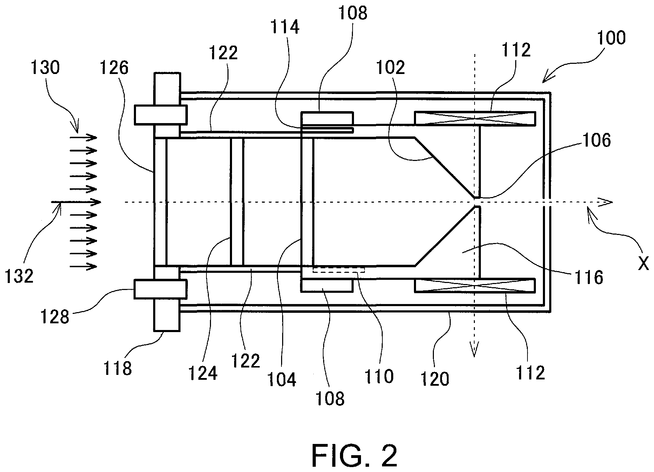

By reference to FIG. 2, the configuration of the slow atomic beam generation device according to the first embodiment is described. FIG. 2 schematically shows the configuration of the slow atomic beam generation device 100 according to the first embodiment. Hereinafter, it is assumed that an axis in parallel with the longitudinal direction of the slow atomic beam generation device 100 is called an X-axis.

The slow atomic beam generation device 100 includes a high-temperature portion and a room-temperature portion in a roughly classified view.

The high-temperature portion includes a right-angle conical mirror 102, an optical window 104, an opening 106, a heater 108, a sample 110, a magnetic field generation device 112, a thermometer 114 and a high-temperature bath 116.

The room-temperature portion includes a flange 118, a thermal radiation shield 120, thermally insulated rods 122, a cold filter window 124, a vacuum-tight window 126 and a vacuum-tight electric connector 128.

The high-temperature bath 116 has an axisymmetrical shape with respect to the X-axis. The high-temperature bath 116 has, for example, a 2n-fold axis symmetric shape (n is an integer of two or greater) with respect to the X-axis. The high-temperature bath 116 may have a cylindrical shape.

The high-temperature bath 116 includes the sample 110 serving as an atom source, the optical window 104 which is provided on one end and through which laser light is allowed to pass, and the right-angle conical mirror 102 provided on the other end. A space axisymmetrical with respect to the X-axis is formed in the high-temperature bath 116; on the inner surface, the right-angle conical mirror 102 is provided so as to face the optical window 104 provided on the one end. In a case where the high-temperature bath 116 has a four-fold axially symmetrical, a right-angled quadrangular pyramid mirror is provided instead of the right-angle conical mirror 102. The right-angle conical mirror 102 reflects, toward the optical window 104, laser light (laser light 130 described later) having entered the inside of the high-temperature bath 116 from the optical window 104. The opening 106 is formed at the apex of the right-angle conical mirror 102. The opening 106 is a hole that opens at the apex. Since the apex is disposed on the X-axis, the opening 106 is disposed on the X-axis. As described later, an atomic beam is emitted from the opening 106 to the outside of the high-temperature bath 116.

The thermometer 114 is provided on a side surface of the high-temperature bath 116, and measures the temperature of the high-temperature bath 116. The thermometer 114 is, for example, thermocouple thermometer, a resistance thermometer using platinum or the like.

The heater 108 that heats the high-temperature bath, and the magnetic field generation device 112 that generates a magnetic field are provided on an outer peripheral surface of the high-temperature bath 116.

The magnetic field generation device 112 generates a magnetic field for trapping atoms using the magneto-optical trap (MOT) method, in the high-temperature bath 116. The magnetic field generation device 112 may be provided on the outer peripheral surface of the high-temperature bath 116, or provided on the inner surface of the thermal radiation shield 120.

The magnetic field generation device 112 may be a coil. For example, the coil is an anti-Helmholtz coil that has a shape axisymmetrical with respect to the X-axis, and allows currents to flow antisymmetrically with respect to the central axis. Formation of a large gradient magnetic field requires a large number of turns of large-diameter wire that allows a flow of a great current. It is a matter of course that a coil other than this may be adopted.

In a case where the setting temperature of the high-temperature bath 116 is 250°C or less, a coated copper wire or the like resistant to the temperature is used for the coil.

In a case where the slow atomic beam generation device 100 is used in a high-temperature environment, such as a case where the setting temperature of the high-temperature bath 116 is 270°C or the like, for example, a non-coated copper wire is used for the coil. For example, a bobbin made of alumina ceramic or the like is used. Grooves are formed on the bobbin so as to prevent adjacent copper wires from being in contact with each other. The grooves are used as guides, and the copper wire is wound around the bobbin.

In another example, the magnetic field generation device 112 may be a permanent magnet. For example, the permanent magnet is a pair of permanent magnets that have an axisymmetrical ring shape and are magnetized antisymmetrically with respect to the central axis. In another example, the permanent magnet may be a permanent magnet that has a cylindrical shape covering the high-temperature bath 116, and is magnetized in the radial direction. It is a matter of course that a permanent magnet other than these permanent magnets may be adopted. The other permanent magnet is described later.

A permanent magnet having a Curie temperature sufficiently higher than the setting temperature is adopted. For example, a samarium cobalt magnet, an alnico magnet, a strontium ceramic magnet or the like is adopted as the permanent magnet according to this embodiment.

The magnetic field generation device 112 forms a quadrupole magnetic field suitable for the right-angle conical mirror 102. In the case where the right-angled quadrangular pyramid mirror is adopted instead of the right-angle conical mirror 102, two pairs of anti-Helmholtz coils or four permanent magnets that are arranged apart in directions with respect to the central axis and form a two-dimensional quadrupole magnetic field are used as the magnetic field generation device 112.

In another example, the magnetic field generation device 112 may be 2n-fold symmetric coil set (n is an integer of two or greater) formed by 2n pieces of rectangular-shaped coils or saddle-shaped coils, that have an identical shape and are provided on side surfaces (outer peripheral surfaces of the high-temperature bath 116) enclosing symmetric axis of the high-temperature bath 116. For example, the control device 16 generates a two-dimensional quadrupole magnetic field from the magnetic field generation device 112, by flowing currents of coils which face each other and between which the 2n rotationally symmetric axes intervene, in directions opposite to each other.

In a still another example, the magnetic field generation device 112 may be 2n-fold symmetric permanent magnet set (n is an integer of two or greater) formed by 2n pieces of quadrangular prism-shaped or arc prism-shaped permanent magnets (permanent magnets having quadrangular or arc sections), that have an identical shape and are provided on side surfaces (outer peripheral surfaces of the high-temperature bath 116) enclosing symmetric axis of the high-temperature bath 116. The permanent magnets are magnetized in angular directions (circumferential directions where the symmetric axes are enclosed) with respect to the symmetric axes. The magnetization directions of the permanent magnets which face each other and between which the 2n rotationally symmetric axes intervene are directions opposite to each other. Thus, a quadrupole magnetic field is formed.

The heater 108 heats the high-temperature bath 116 so that the high-temperature bath 116 can reach the setting temperature. For example, the heater 108 heats part or the entirety of the high-temperature bath 116. Heating by the heater 108 transfers the state of the atom source from the solid phase to the gas phase, thus generating atomic gas, which is released into the space in the high-temperature bath 116. Heating by the heater 108 can prevent the atomic gas from being recondensed when the atomic gas collides with the optical window 104, the inner wall of the high-temperature bath 116 and the like. The role of transferring the state of the atom source from the solid phase to the gas phase can be achieved not only by the heater 108 but also by ablation using laser.

The sample 110 contains an atom source, and is accommodated in a compartment provided on a side surface of the inner wall of the high-temperature bath 116. The sample 110 may be inserted or taken out through the opening 106. Alternatively, the slow atomic beam generation device may be disassembled, and the optical window may be taken out, thus allowing the sample 110 to be inserted or taken out.

As the material of the high-temperature bath 116, a material is selected to prevent the high-temperature bath 116 from chemically reacting with the atomic gas and being alloyed with the atomic gas at the setting temperature.

The temperature of the high-temperature bath 116 is set so that the saturated vapor pressure of the sample 110 is sufficiently high with respect to the degree of vacuum of the environment where the sample 110 is installed, and the saturated vapor pressure of a portion to be heated, such as the high-temperature bath 116, is sufficiently low. For example, in a case where the atom source is strontium, the setting temperature of the high-temperature bath 116 is set to 270°C or to 270°C or higher.

The material of the right-angle conical mirror 102 and the high-temperature bath 116 may be, for example, aluminum, a metal coated with aluminum, an insulator coated with aluminum, silver, a metal coated with silver, an insulator coated with silver, SUS (stainless steel), glass coated with an optical multi-layer film or the like. The insulator is made of ceramic (e.g., highly pure alumina etc.) or glass.

The material of the right-angle conical mirror 102 may be a material identical to or different from the material of the high-temperature bath 116. For example, in the case where the material of the right-angle conical mirror 102 is the same as the material of the high-temperature bath 116, the surface functioning as the right-angle conical mirror 102 is mechanically polished, thereby enabling the surface to be finished as mirror surfaces. In the case where the material of the right-angle conical mirror 102 is different from the material of the high-temperature bath 116, the surface functioning as the right-angle conical mirror 102 may be coated with aluminum plating, silver plating or the like. Alternatively, the surface functioning as the right-angle conical mirror 102 may be coated with an optical multi-layer film.

As the material of the right-angle conical mirror 102 and the high-temperature bath 116, for example, a material is adopted that has a low vapor pressure in a state of being heated to the setting temperature and a suppressed amount of emitted gas in ultra high vacuum. As the material of the right-angle conical mirror 102 and the high-temperature bath 116, a material may be adopted that allows the right-angle conical mirror 102 to have a sufficient reflectance with respect to incident laser light (laser light 130 described later) in a state of being heated to the setting temperature, furthermore, prevents the surface of the right-angle conical mirror 102 from chemically reacted with the atomic gas and from alloyed with the atom gas, and allows the surface of the right-angle conical mirror 102 to hold a sufficient reflectance. The surface of the right-angle conical mirror 102 is polished so that the surface roughness of the right-angle conical mirror 102 can be sufficiently small with respect to the wavelength of incident laser light.

As the material of the optical window 104, a material (e.g., sapphire) that maintains the transmittance at the setting temperature is adopted. A film capable of maintaining the transmittance at the setting temperature may be formed on the optical window 104 made of sapphire. For example, a titanium oxide alloy/fused-silica multi-layered laminated film may be formed on the optical window 104 using an electron beam evaporation method.

The thermal radiation shield 120 is installed so as to prevent thermal radiation to components arranged around the slow atomic beam generation device 100. The thermal radiation shield 120 is provided so as to cover the heater 108, the magnetic field generation device 112 and the high-temperature bath 116. That is, the heater 108, the magnetic field generation device 112 and the high-temperature bath 116 are arranged in the space enclosed by the thermal radiation shield 120. For example, a material having a low emissivity on the surface (e.g., mirror-finished aluminum, or mirror-finished stainless steel) is adopted. A plurality of thermal radiation shields 120 may be provided in an overlaid manner. For example, in a case where a double-layered sheet is adopted, a configuration where the outer sheet is made of a material having a high permeability, such as permalloy, serves as both a thermal radiation shield and an electromagnetic shield.

The windows are arranged on the X-axis in an order of the optical window 104, the cold filter window 124 and the vacuum-tight window 126. The optical window 104 is provided on one end of the high-temperature bath 116 to face the right-angle conical mirror 102.

The material of the vacuum-tight window 126 is, for example, Pyrex (R) glass, fused-silica glass or the like. A film capable of maintaining the transmittance, such as an antireflection coat, may be applied on the surface of the vacuum-tight window 126.

The cold filter window 124 is provided on the optical path of laser light entering the optical window 104 between the optical window 104 and the vacuum-tight window 126, and prevents the vacuum-tight window 126 from thermal radiation through the optical window 104. The material of the cold filter window 124 is, for example, the same material as that of the vacuum-tight window 126.

The thermal-insulated support rods 122 are provided from the high-temperature bath 116 to the flange 118. As the material of the thermal-insulated support rods 122, a material having a low thermal conductivity is adopted to prevent heat flow from the high-temperature portion to the room-temperature portion, improve the thermal efficiency of the heater of the high-temperature portion, and maintain the stability of the temperature of the room-temperature portion. For example, magnesia, steatite ceramic or the like is used as the material of the thermal-insulated support rods 122.

The vacuum- tight electric connector 128 is a hermetic connector for transmitting and receiving an electric signal between a vacuum space and an atmospheric space. For example, the vacuum- tight electric connector 128 is used to input and output a signal of the thermometer 114, supply a current to the heater 108, and supply a current to the magnetic field generation device 112. For the convenience sake, no wiring is shown in FIG. 2.

The flange 118 is a member for attaching the slow atomic beam generation device 100 to a physics package of an atomic clock device such as the optical lattice clock 10, an atom interferometer device and the like, or a physics package of a quantum computer device that uses atoms as qubits. The physics package includes a vacuum chamber. The high-temperature bath 116 of the slow atomic beam generation device 100 is placed in ultra high vacuum.environment. The inside of the high-temperature bath 116 is maintained ultra high vacuum. Accordingly, the flange 118 has a sealing mechanism for sealing the vacuum, such as of a metal gasket system, for example. If heating the flange 118 and vacuum chamber due to heat flow from the high-temperature portion can be problematic, the flange 118 may be water-cooled.

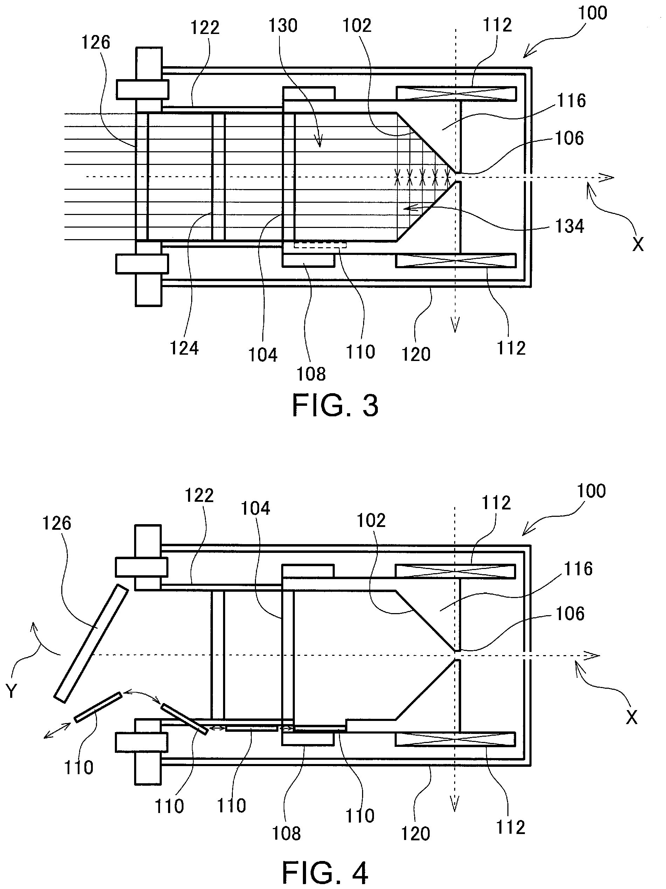

Hereinafter, by reference to FIGS. 2 and 3, the operation of the slow atomic beam generation device 100 is described. FIG. 3 schematically shows the configuration of the slow atomic beam generation device according to the first embodiment.

As shown in FIGS. 2 and 3, laser light 130 passes through the vacuum- tight window 126 from the outside of the slow atomic beam generation device 100, and enters the inside of the slow atomic beam generation device 100. The laser light 130 has circularly polarized light (e.g., σ+). The laser light 130 having entered the inside of the slow atomic beam generation device 100 passes through the cold filter window 124 and the optical window 104, and is reflected twice by the right-angle conical mirror 102 in the high-temperature bath 116 (see arrows 134). The reflected laser light 130 has circularly polarized light (e.g., σ-) opposite to that on the incident path, passes through the optical window 104, the cold filter window 124 and the vacuum- tight window 126, and is emitted to the outside of the slow atomic beam generation device 100.

A gradient magnetic field is formed in the space in the high-temperature bath 116 by the magnetic field generation device 112. For example, a specially constant magnetic field gradient is formed on the X-axis.

A trap space for trapping atoms is formed in the high-temperature bath 116 by the reflected laser light 130 and the magnetic field generation device 112, thus realizing the magneto-optical trap (MOT) that traps atoms.

By heating the high-temperature bath 116 by the heater 108, the atom source is heated, atoms are vaporized and released into the space in the high-temperature bath 116. The atomic gas is trapped using the magneto-optical trap in the high-temperature bath 116 and is cooled.

As shown in FIGS. 2 and 3, laser light 132 passes through the vacuum- tight window 126 from the outside of the slow atomic beam generation device 100 along the X-axis, and enters the inside of the slow atomic beam generation device 100. The laser light 132 is push laser light, and outputs the atoms trapped using the magneto-optical trap in the high-temperature bath 116 and cooled, to the outside of the high-temperature bath 116 through the opening 106. A slow atomic beam is formed by the thus output atoms. An opening is formed on the X-axis in the thermal radiation shield 120. The slow atomic beam emitted to the outside from the high-temperature bath 116 is emitted to the outside of the thermal radiation shield 120 through the opening formed in the thermal radiation shield 120.

By the slow atomic beam generation device 100, not only the sample 110 but also the entire high-temperature bath 116 including the optical window 104 is heated. Accordingly, even with an element which has a low saturated vapor pressure at a room temperature and with which sufficient atomic gas cannot be obtained, sufficient atomic gas can be obtained by increasing the saturated vapor pressure by heating. For example, strontium is adopted as the atom source. By heating the high-temperature bath 116 to 270°C or to 270°C or higher (see Table 1), sufficient atomic gas can be obtained even in the case where strontium is adopted as the atom source. Use of the magneto-optical trap can generate a cooled atomic beam at a high flow rate. Note that an element other than strontium (e.g., an element shown in Table 1) may be adopted as an element having a low saturated vapor pressure at a room temperature. For example, ytterbium may be adopted as the atom source.

The heated high-temperature bath 116 and therearound except the opening 106 through which the slow atomic beam is output are covered with the thermal radiation shield 120 and the cold filter window 124. Accordingly, the thermal radiation emitted from the high-temperature portion can be suppressed.

Preferably, in an area where the laser light reflected by the right-angle conical mirror 102 intersects in the magneto-optical trap, the magnetic field gradient contributing to the magneto-optical trap is strong and homogeneous so as to allow cooled atoms to be trapped over the entire area as wide as possible. Preferably, in the case where permanent magnets are adopted as the magnetic field generation device 112, a cylindrical magnet that covers the high-temperature bath 116, has a long length in the height direction of the cylinder with respect to the inner diameter of the cylinder, and is magnetized in the radial direction. Preferably, in the case where the coil is adopted as the magnetic field generation device 112, the adopted coil may be an antisymmetric winding tetracoil made up of total four current bands or an antisymmetric winding coil made up of six or more even number of current bands, the tetracoil or the coil forming an antisymmetric current distribution with respect to the center point of the coil.

With respect to miniaturization of the slow atomic beam generation device, the length of the thermal-insulated support rods 122 that serve for main thermal conduction between the high-temperature portion and the room-temperature portion is an important parameter. In term of low outgassing material in UHV,, magnesia (MgO) is suitable as the material of the thermal insulated support rods 122. Preferably, the number of thermal insulated support rods 122 is three in view of thermal insulation. It is a matter of course that the number is only an example. The number may be other than three. Preferably, aluminum, which has a high reflectance and is resistant to chemical reaction with the atomic gas, is adopted as the material of the high-temperature bath 116. Use of aluminum, which is a light metal, as the material can reduce the weight of the slow atomic beam generation device, and reduce the risk of deforming the support pillars.

Hereinafter, by reference to FIG. 4, insertion and taking out of the sample 110 are described. FIG. 4 schematically shows the configuration of the slow atomic beam generation device 100 according to the first embodiment.

The sample 110 may be accessed through a site around the outer periphery of the optical window 104. For example, as indicated by a symbol Y, the vacuum- tight window 126 is detachably provided on the slow atomic beam generation device 100. The vacuum- tight window 126 is taken out, the sample 110 is taken out using an appropriate jig from the compartment that accommodates the sample 110 on the side surface of the high-temperature bath 116. The vacuum- tight window 126 is taken out, the sample 110 is inserted into the slow atomic beam generation device 100 using the jig, and can be stored in the compartment.

### <Configuration of slow atomic beam generation device according to second embodiment>

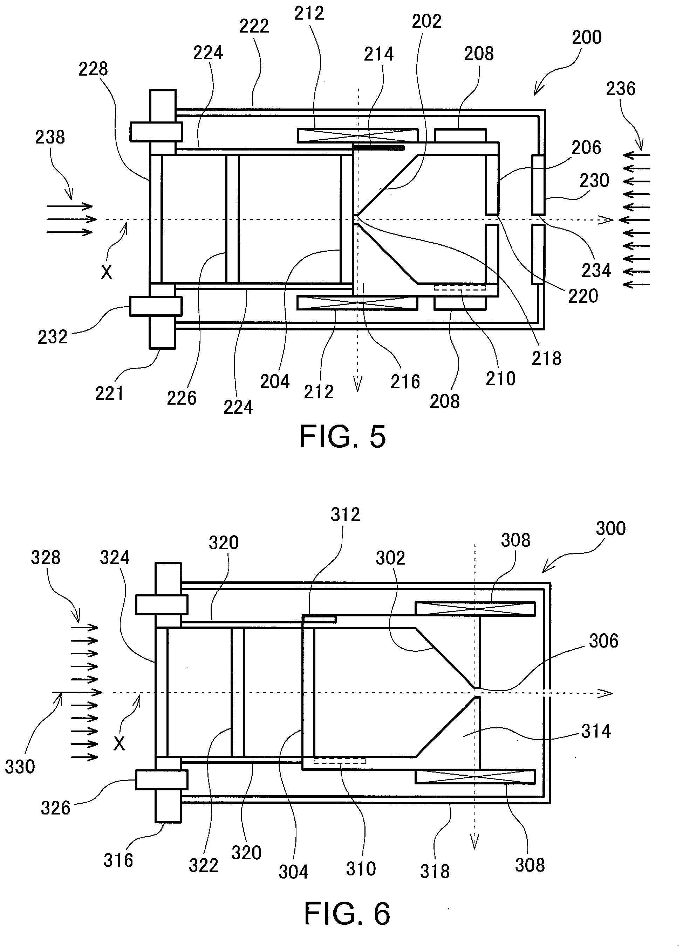

By reference to FIG. 5, the configuration of a slow atomic beam generation device according to a second embodiment is described. FIG. 5 schematically shows the configuration of the slow atomic beam generation device 200 according to the second embodiment.

The slow atomic beam generation device 200 includes a high-temperature portion and a room-temperature portion in a roughly classified view.

The high-temperature portion includes a right-angle conical mirror 202, an optical window 204, an optical window 206, a heater 208, a sample 210, a magnetic field generation device 212, a thermometer 214 and a high-temperature bath 216. An opening 218 is formed at the apex of the right-angle conical mirror 202. An opening 220 is formed in the optical window 206.

The room-temperature portion includes a flange 221, a thermal radiation shield 222, an thermal insulated support rod 224, a cold filter window 226, a vacuum- tight window 228, an optical window 230 provided on the thermal radiation shield 222, and a vacuum-tight electric connector 232. An opening 234 is formed in the optical window 230.

The openings 218, 220 and 234 are formed on the X-axis.

The difference between the slow atomic beam generation device 100 according to the first embodiment and the slow atomic beam generation device 200 according to the second embodiment is the direction of the high-temperature bath 216, i.e., an incident direction of laser light for realizing a magneto-optical trap in the high-temperature bath 216. The direction of the high-temperature bath 216 according to the second embodiment is the direction opposite to the direction of the high-temperature bath 116 according to the first embodiment. The incident direction of laser light 236 for realizing the magneto-optical trap in the high-temperature bath 216 is the direction opposite to the incident direction of the laser light 130 according to the first embodiment.

In the second embodiment, the laser light 236 passes through the optical windows 230 and 206, enters the inside of the high-temperature bath 216, is reflected twice by the right-angle conical mirror 202, and travels toward the optical window 206. A gradient magnetic field is formed in the space in the high-temperature bath 216 by the magnetic field generation device 212. The high-temperature bath 216 is heated by the heater 208, which generates atomic gas from the atom source, and releases the atomic into the space in the high-temperature bath 216. The magneto-optical trap is realized by the reflected laser light 236 and by the magnetic field formed by the magnetic field generation device 212. The atomic gas is trapped using the magneto-optical trap in the high-temperature bath 216 and is cooled. Laser light 238 that is push laser light passes through the vacuum- tight window 228, the cold filter window 226 and the optical window 204, and then enters the space in the high-temperature bath 216 through the opening 218. The laser light 238 having entered the space in the high-temperature bath 216 outputs the atoms trapped using the magneto-optical trap in the high-temperature bath 216 and cooled to the outside of the slow atomic beam generation device 200 through the openings 220 and 234. A slow atomic beam is formed by the thus output atoms.

The slow atomic beam generation device 200 according to the second embodiment can exert advantageous effects similar to those of the slow atomic beam generation device 100 according to the first embodiment.

### <Configuration of slow atomic beam generation device according to third embodiment>

By reference to FIG. 6, the configuration of a slow atomic beam generation device according to a third embodiment is described. FIG. 6 schematically shows the configuration of the slow atomic beam generation device 300 according to the third embodiment.

The slow atomic beam generation device 300 includes a high-temperature portion and a room-temperature portion in a roughly classified view.

The high-temperature portion includes a right-angle conical mirror 302, an optical window 304, an opening 306, a heater 308 serving also as a magnetic field generation device, a sample 310, a thermometer 312, and a high-temperature bath 314.

The room-temperature portion includes a flange 316, a thermal radiation shield 318, thermal isolated support rods 320, a cold filter window 322, a vacuum- tight window 324 and a vacuum- tight electric connector 326.

In the third embodiment, the heater 308 functions as a device that heats the high-temperature bath 314, and has a function of causing a gradient magnetic field for realizing a magneto-optical trap in a space in the high-temperature bath 314. The components other than the heater 308 are the same as components of the slow atomic beam generation device 100 according to the first embodiment.

The heater 308 may be provided on the outer peripheral surface of the high-temperature bath 314, or provided on the inner surface of the thermal radiation shield 318.

To form the heater 308 serving also as the magnetic field generation device, for example, a sheath heater wire that is a heater wire covered with sheath is adopted. The sheath heater wire is wound around the high-temperature bath 314 so as to form a quadrupole magnetic field by the sheath heater wire, thus forming the heater 308 serving also as the magnetic field generation device.

By configuring two divided directions of winding the sheath heater wire, the output of the heat quantity and the gradient of the magnetic field are independently controlled. This is because the heat quantity occurs proportionally with the square of current irrespective of the direction of the current, and the direction of the formed magnetic field depends on the direction of the current.

The heater 308, which serves also as the magnetic field generation device, may be configured by a resistance wire wound around a multi-layered ceramic bobbin.

The resistance wire is wound at intervals so as to prevent contact of the resistance wire, and may be potted with a ceramic or a heat-resistance resin and fixed, thus forming the heater 308 serving also as the magnetic field generation device.

The heater 308 serving also as the magnetic field generation device is formed by multiply winding a sheath heater and a resistance wire in an anti-Helmholtz coil manner, for example. The outermost layer of the heater 308 (i.e., the outermost layer of the anti-Helmholtz coil) is wound in the direction opposite to that of the other layers. When no current flows in the outermost layer of the heater 308 and the current flows in all the other layers, the gradient magnetic field occurring around the center of the heater 308 is the maximum. When the current flows in the outermost layer, the gradient magnetic field becomes small. When the current flows in all the layers, the Joule heat is the maximum. The current flowing through the heater 308 is thus controlled, which can in turn controls the magnitude of the gradient magnetic field and the magnitude of the Joule heat. That is, by changing the magnitude of the current, the magnitude of the gradient magnetic field and the magnitude of the Joule heat can be changed. According to such a configuration, the heater 308 can serve as both the magnetic field generation device that generates the magnetic field, and the heating device that heats the high-temperature bath 116. For example, the control device 16 shown in FIG. 1 controls the current flowing through the heater 308. For example, tantalum metal, nickel metal or the like may be selected as the material of the resistance wire.

In an example other than the example described above, the resistance wire may be multiply wound in an antisymmetric tetracoil manner, thus forming the heater 308 serving also as the magnetic field generation device. By adopting the antisymmetric tetracoil, the magnetic field gradient in the radial direction can be uniformly formed in the symmetric-axis directions of the high-temperature bath 314 in comparison with the anti-Helmholtz coil.

The slow atomic beam generation device 300 according to the third embodiment can exert advantageous effects similar to those of the slow atomic beam generation device 100 according to the first embodiment. That is, the high-temperature bath 314 is heated by the heater 308, which generates atomic gas from the atom source, and releases the atomic gas into the space in the high-temperature bath 314. The gradient magnetic field for realizing the magneto-optical trap is formed in the space in the high-temperature bath 314 by the heater 308. The laser light 328 having entered the high-temperature bath 314 is reflected twice by the right-angle conical mirror 302. The magneto-optical trap is realized by the magnetic field formed by the heater 308 and the reflected laser light 328, thus cooling the atomic gas. By laser light 330 that is push laser light having entered the inside of the high-temperature bath 314 along the X-axis, the cooled atoms are output to the outside of the slow atomic beam generation device 300. Thus, a slow atomic beam is formed.

### <Configuration of slow atomic beam generation device according to fourth embodiment>

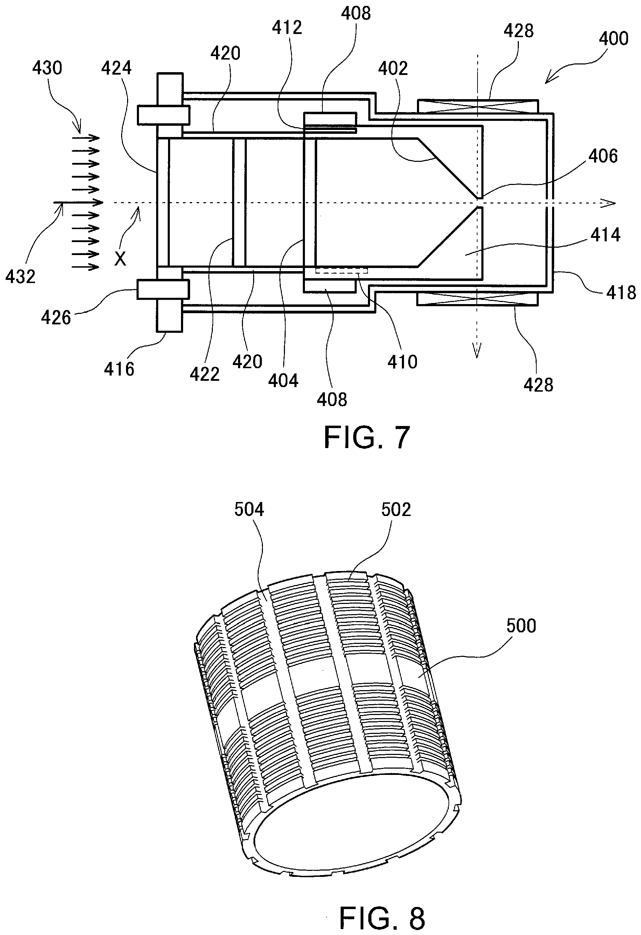

By reference to FIG. 7, the configuration of a slow atomic beam generation device according to a fourth embodiment is described. FIG. 7 schematically shows the configuration of the slow atomic beam generation device 400 according to the fourth embodiment.

The slow atomic beam generation device 400 includes a high-temperature portion and a room-temperature portion in a roughly classified view.

The high-temperature portion includes a right-angle conical mirror 402, an optical window 404, an opening 406, a heater 408, a sample 410, a thermometer 412 and a high-temperature bath 414.

The room-temperature portion includes a flange 416, a thermal radiation shield 418, thermal insulated support rods 420, a cold filter window 422, a vacuum- tight window 424, a vacuum- tight electric connector 426, and a magnetic field generation device 428 installed on the thermal radiation shield 418.

The difference between the slow atomic beam generation device 100 according to the first embodiment and the slow atomic beam generation device 400 according to the fourth embodiment is an installation position of the magnetic field generation device. The components other than the magnetic field generation device are the same as components of the slow atomic beam generation device 100 according to the first embodiment.

In the first embodiment, the magnetic field generation device 112 is installed on the outer peripheral surface of the high-temperature bath 116 in the high-temperature portion. Meanwhile, in the fourth embodiment, the magnetic field generation device 428 is installed on the outer peripheral surface of the thermal radiation shield 418 in the room-temperature portion. That is, the magnetic field generation device 428 is disposed outside of the space enclosed by the thermal radiation shield 418. Even in the case where the magnetic field generation device 428 is disposed outside of the thermal radiation shield 418, the gradient magnetic field for realizing the magneto-optical trap is formed in the space in the high-temperature bath 414 by the magnetic field generation device 428.

In the first embodiment, the magnetic field generation device is disposed at a position closer to the high-temperature bath realizing the magneto-optical trap than that in the fourth embodiment. Consequently, in the case where the magnetic field generation device is made up of coils, the first embodiment can reduce the current contributing to the magneto-optical trap in comparison with the fourth embodiment. In the case where the magnetic field generation device is made up of permanent magnets, the first embodiment can suppress leakage of the magnetic field and suppress adverse effects on a measurement system in comparison with the fourth embodiment.

Meanwhile, in the fourth embodiment, the magnetic field generation device is disposed at a position farther than the high-temperature bath realizing the magneto-optical trap in comparison with the first embodiment. Consequently, the fourth embodiment is more advantageous in view of heat resistance of the coil wire than the first embodiment. For example, a coated copper wire may be adopted. Since the magnetic field generation device is disposed outside of the thermal radiation shield 418, a wider space in which the magnetic field generation device is installed can be secured. Consequently, complicated coils, such as two-pair coils for forming a two-dimensional quadrupole magnetic field and the like, can be installed.

The configuration shown in Fig. 6 includes the right-angle conical mirror 402. It may be replaced with a quadrangular pyramid shape mirror. The magnetic field generation device 428 is made up of coils that can generate a two-dimensional quadrupole magnetic field.

The slow atomic beam generation device 400 according to the fourth embodiment can exert advantageous effects similar to those of the slow atomic beam generation device 100 according to the first embodiment. That is, the magneto-optical trap is realized by laser light 430 entering the high-temperature bath 414 and reflected twice by the right-angle conical mirror 402 and by the magnetic field formed by the magnetic field generation device 428, atoms are cooled and trapped. The cooled atoms are output as a slow atomic beam from the slow atomic beam generation device 400 to the outside by laser light 432 that is push laser light.

### <Heater serving also as magnetic field generation device>

Hereinafter, a specific configuration of the heater serving also as the magnetic field generation device is described. The heater serving also as the magnetic field generation device includes: a ceramic bobbin having grooves formed to prevent contact between wires; and a heater wire, such as of tungsten, wound around the ceramic bobbin along the grooves.

FIG. 8 shows an example of the ceramic bobbin. FIG. 8 is a perspective view of the ceramic bobbin. The ceramic bobbin 500 has a cylindrical shape. A plurality of lateral grooves 502 formed along the circumferential direction of the cylinder, and a plurality of longitudinal grooves 504 formed along the axial direction of the cylinder are formed on the surface of the ceramic bobbin 500. The lateral grooves 502 are grooves in parallel with each other. The longitudinal grooves 504 are grooves in parallel with each other.

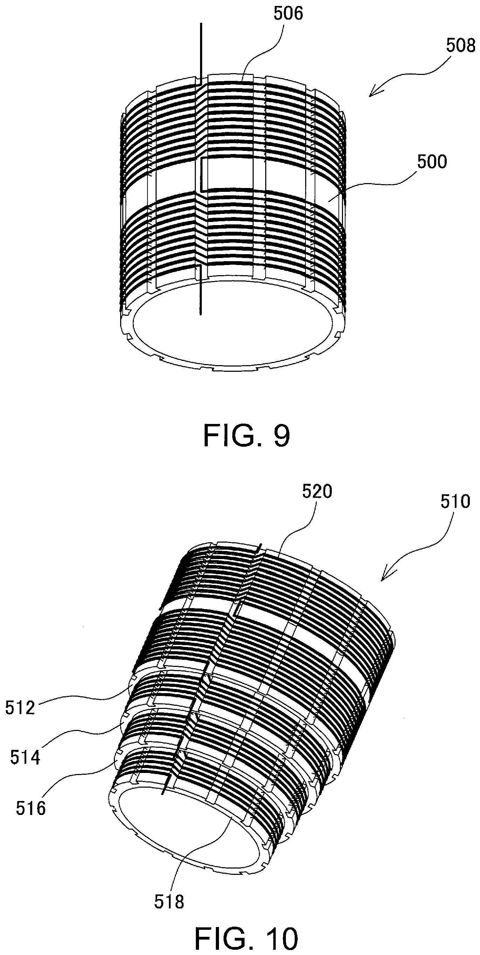

FIG. 9 shows an example of the heater serving also as the magnetic field generation device. FIG. 9 is a perspective view of the heater 508 that also serves as a magnetic field generation device. A resistance wire 506 is stored in the lateral grooves 502 of the ceramic bobbin 500 and is wound around the ceramic bobbin 500. Thus, the heater 508 serving also as the magnetic field generation device is formed. The longitudinal grooves 504 function as guides for the resistance wire 506 from lateral grooves 502 respective to adjacent lateral grooves 502. Furthermore, the longitudinal grooves 504 function as grooves for release of gases and contaminants.

FIG. 10 shows another example of the heater serving also as the magnetic field generation device. FIG. 10 is a perspective view of the heater 510 that also serves as the magnetic field generation device.

The heater 510 serving also as the magnetic field generation device is a multi-layer coil. In the example shown in FIG. 10, the heater 510 serving also as the magnetic field generation device is a four-layer coil. The heater 510 serving also as the magnetic field generation device includes: four ceramic bobbins having different diameters (ceramic bobbins 512, 514, 516 and 518); and resistance wires 520 wound around the respective ceramic bobbins. Similar to the example shown in FIG. 8, on each ceramic bobbin, a plurality of lateral grooves and a plurality of longitudinal grooves are formed. The resistance wire 520 is stored in the lateral grooves and wound around each ceramic bobbin. The ceramic bobbins 512, 514, 516 and 518, on which the resistance wires 520 are wound, are stacked, thus forming the heater 510 serving also as the magnetic field generation device. For example, by controlling the current flowing through the coil wound around each ceramic bobbin, each coil can function as the heating device or the magnetic field generation device.

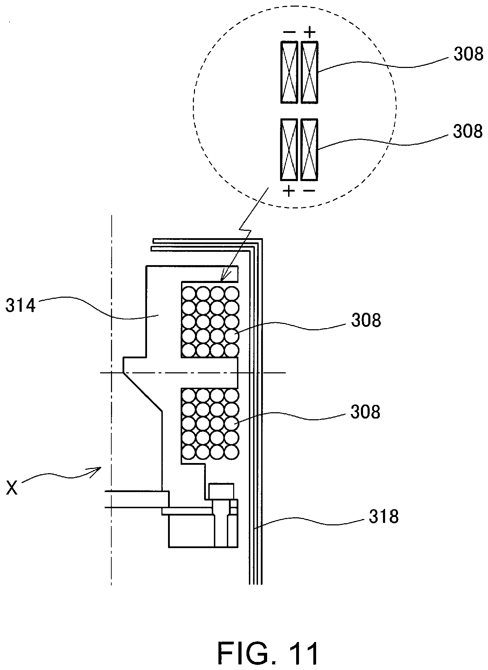

FIG. 11 shows an example of the configurations of coils forming the heaters 308 serving also as the magnetic field generation devices. FIG. 11 is a sectional view showing the structure around the coils. The coils shown in FIG. 11 are an example of coils constituting the heaters 308 serving also as the magnetic field generation devices. The coils are made up of sheath heaters. In a virtual circle in FIG. 11, the schematic configurations of the coils are shown.

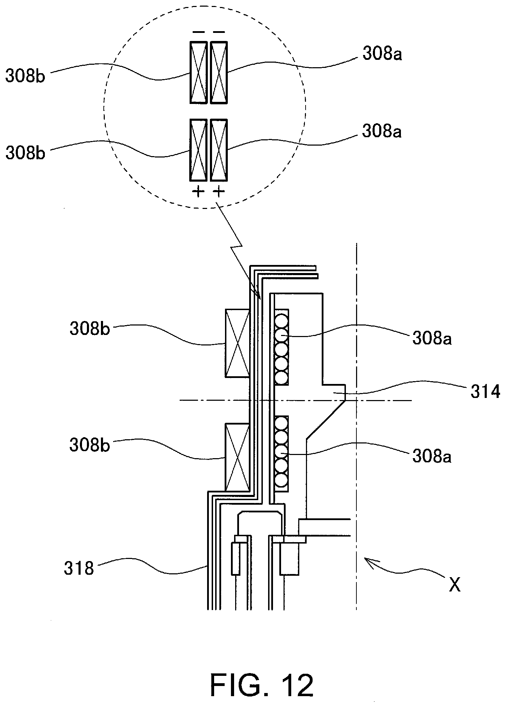

FIG. 12 shows another example of the configurations of coils forming heaters serving also as magnetic field generation devices. FIG. 12 is a sectional view showing the structure around the coils. In the example shown in FIG. 12, coils 308a constituting heaters serving also as magnetic field generation devices are provided for the high-temperature portion in a state of being wound around the high-temperature bath 314, and coils 308b forming a gradient magnetic field is provided for the room-temperature portion in a state of being wound around the thermal radiation shield 318. In a virtual circle in FIG. 12, the schematic configurations of the coils are shown.

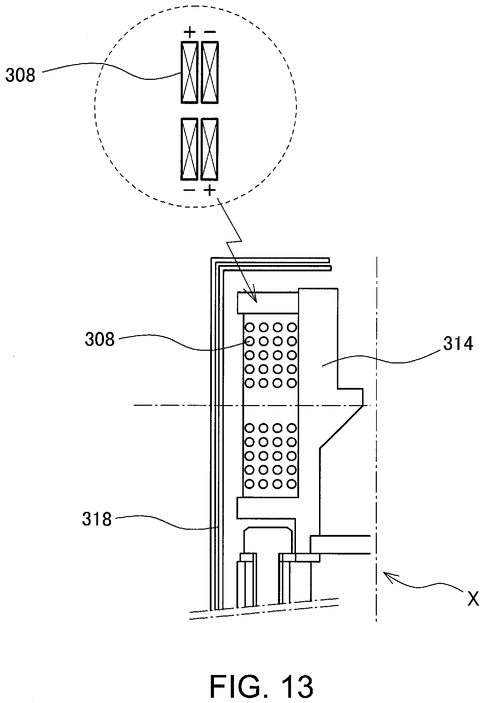

FIG. 13 shows another example of the configuration of coils forming heaters 308 serving also as magnetic field generation devices. FIG. 13 is a sectional view showing the configuration around the coils. In the example shown in FIG. 13, the coil is formed by winding a tungsten wire around a mold material. The coil is fixed on the outer peripheral surface of the high-temperature bath 314, and serves as the heater 308 serving also as the magnetic field generation device. In a virtual circle in FIG. 13, a schematic configuration of each coil is shown.

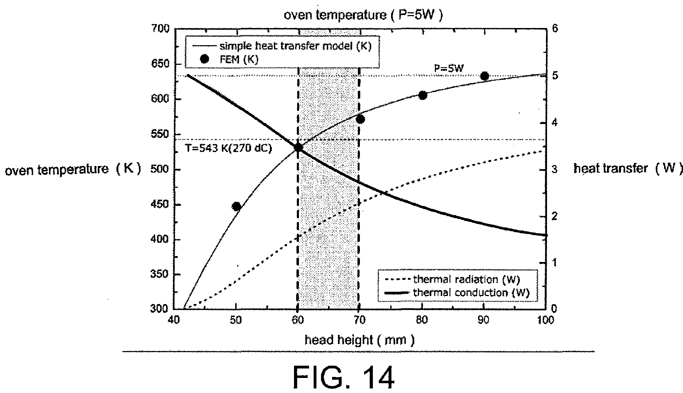

FIG. 14 shows the relationship between the entire length of the slow atomic beam generation device and the attained temperature of the high-temperature bath. The height direction of the slow atomic beam generation device is a direction in which the laser light is incident, i.e., a direction in parallel to the X-axis. Here, for example, the power supplied to the heater that heats the high-temperature bath is assumed as 5 W.

FIG. 14 shows the attained temperature of the high-temperature bath with respect to the height of the slow atomic beam generation device. In FIG. 14, the abscissa axis indicates the height, and the left ordinate axis indicates the attained temperature. The right ordinate axis indicates heat transfer (thermal radiation and thermal conduction). The attained temperature is a value calculated by finite element method.

As the entire length of the slow atomic beam generation device is longer, the size of the slow atomic beam generation device is larger but the length of the adiabatic supporter is longer. Accordingly, the heat transferred from the high-temperature bath to the flange at a room temperature decreases, and the attained temperature of the high-temperature bath becomes high.

On the other hand, as the height of the slow atomic beam generation device is lower, the size of the slow atomic beam generation device can be smaller but the length of the adiabatic supporter is shorter. Accordingly, the heat transferred from the high-temperature bath to the flange increases, and the attained temperature of the high-temperature bath becomes low.

As described above, by changing the height of the slow atomic beam generation device, the attained temperature of the high-temperature bath can be changed.

According to each embodiment described above, the high-temperature bath, which includes the atom source, is heated. Accordingly, even with an element which has a low saturated vapor pressure at a room temperature and with which sufficient atomic gas cannot be obtained, the saturated vapor pressure can be high by heating. As a result, sufficient atomic gas can be obtained, and the magneto-optical trap is allowed to function, which can generate a cooled atomic beam at a high flow rate.

The high-temperature bath except the opening is covered with the thermal radiation shield, and the cold filter window is provided at a portion where laser light is incident. Accordingly, thermal radiation to the outside of the slow atomic beam generation device can be suppressed.

A conventional configuration form for regular use, i.e., a configuration that includes an atomic oven 702, a Zeeman slower 704, a vacuum chamber 602 enclosing a clock transition space 604, and a mechanism of realizing a magneto-optical trap and clock transition in the vacuum chamber 602, is exemplified as a physics package 700 of an optical lattice clock according to a comparative example, and the reason that the physics package 600 including the slow atomic beam generation device according to this embodiment is suitable for reduction in device size is described below.

The physics package 600 of the optical lattice clock according to this embodiment includes: the slow atomic beam generation device 100 according to the first embodiment; the vacuum chamber 602 enclosing the clock transition space 604 where atoms are arranged; and the mechanism of realizing the magneto-optical trap and clock transition in the vacuum chamber 602.

Hereinafter, the operation of the physics package 600 is described.

In the physics package 600, the inside of the vacuum chamber 602 is vacuumized. The slow atomic beam sufficiently decelerated by the slow atomic beam generation device 100 is emitted from the slow atomic beam generation device 100 and reaches a magneto-optical trap device (MOT device) in the vacuum chamber 602. In the MOT device, a magnetic field having a linear spatial gradient is formed centered on the trap space where atoms are trapped, and MOT light is emitted. Thus, the atoms are trapped in the trap space. The slow atomic beam having reached the MOT device is decelerated in the trap space. Accordingly, the atoms is trapped in the trap space. The optical lattice light beam enters the trap space, and is reflected by an optical resonator provided in the vacuum chamber 602. Accordingly, an optical lattice potential where standing waves are arranged in the travel direction of the optical lattice light beam is formed. The atoms is trapped by the optical lattice potential.

By applying a frequency chirp technique to one of the optical lattice light beam, the optical lattice can be moved in the travel direction of the optical lattice light beam. By the moving optical lattice, the atoms is moved to the clock transition space 604. As a result, the clock transition space 604 deviates from the beam axis of the slow atomic beam.

In the clock transition space 604, a well-frequency-controlled laser beam is irradiated onto atoms to perform high-precision spectroscopy of clock transitions (i.e., resonance transitions of atoms that are the reference for the clock) to measure the specific and unique resonance frequency of atoms. Thus, an accurate atomic clock is achieved. In a case where it is not necessary to move the atoms from the trap space to the clock transition space 604, spectroscopy may be performed in the trap space.

Improvement of the accuracy of the atomic clock requires to make the atoms well isolated from the environmental perturbations in order to measure the accurate frequency. It is particularly important to remove the frequency shift caused by the Doppler effect caused by the atomic thermal motion. In the optical lattice clock, the atom movement is frozen by confining the atoms in a space sufficiently smaller than the wavelength of the clock laser by the optical lattice created by interference of the laser light. Meanwhile, in the optical lattice, the frequencies of atoms are shifted by laser light that forms the optical lattice. For the optical lattice light beam, a specific wavelength or frequency called "magic wavelength" or "magic frequency" is selected, which removes the effects of the optical lattice on the resonant frequency.

Light emitted as a result of the clock transition is received by the optical system device 14, subjected to a spectroscopic process and the like by the control device 16, and the frequency is obtained.

Note that instead of the slow atomic beam generation device 100 according to the first embodiment, the slow atomic beam generation device according to the second, third or fourth embodiment (i.e., the slow atomic beam generation device 200, the slow atomic beam generation device 300 or the slow atomic beam generation device 400) may be adopted.

The physics package 700 of the optical lattice clock according to the comparative example includes: the atomic oven 702; the Zeeman slower 704; the vacuum chamber 602 enclosing the clock transition space 604; and the mechanism of realizing the magneto-optical trap and clock transition in the vacuum chamber 602.

Hereinafter, the operation of the physics package 700 is described.

In the physics package 700, the inside of the vacuum chamber 602 is vacuumized. In the atomic oven 702, the metal source is heated by the heater and the atomic gas is generated accordingly, and the well collimated atomic beam are emitted through the nozzle accordingly. As for the atomic beam, owing to the effect of the Zeeman splitting proportional to the intensity of the magnetic field and the effect of the Doppler shift, the atoms in the atom beam absorb the Zeeman slower light, are given momentum in the deceleration direction, and are decelerated. The sufficiently decelerated atomic beam is emitted from the Zeeman slower 704, and reaches the magneto-optical trap device (MOT device) in the vacuum chamber 602.

The slow atomic beam generation device in any of the first to fourth embodiments is used for the physics package for the optical lattice clock, which can miniaturize the physics package in comparison with the physics package according to the comparative example that uses the Zeeman slower. In particular, the length in the direction where the slow atomic beam is emitted can be reduced. For example, the length is substantially halved, and the physics package can be miniaturized.

The above description exemplifies the optical lattice clock. However, those skilled in the art can apply the technology of each embodiment to other than the optical lattice clock. Specifically, the technology is also applicable to atomic clocks other than the optical lattice clock, and an atom interferometer that is an interferometer using atoms. For example, a physics package that is for an atomic clock and includes the slow atomic beam generation device according to the embodiment and the vacuum chamber, and a physics package for an atom interferometer may be configured. Furthermore, this embodiment is applicable also to various types of quantum information processing devices for atoms or ionized atoms. Here, the quantum information processing devices are devices that perform measurement, sensing, and information processing using the quantum states of atoms and light, and may be, for example, a magnetic field meter, an electric field meter, a quantum computer, a quantum simulator, a quantum repeater, and the like besides an atomic clock and an atom interferometer. The physics package of the quantum information processing device can achieve miniaturization or transportability by using the technology of the embodiment, similar to the physics package of the optical lattice clock. It should be noted that in such devices the clock transition space is not a space for clock measurement but is sometimes dealt with simply as a space for causing clock transition spectroscopy.

These devices use the slow atomic beam generation device according to each embodiment, and thus can use an element that has a low saturated vapor pressure at a room temperature and cannot obtain sufficient atomic gas. Miniaturization and transportability of these devices can be facilitated.

In the above description, for facilitating understanding, the specific aspects are described. However, these exemplify the embodiments, and may be variously embodied in other modes.

### REFERENCE SIGNS LIST

10 optical lattice clock, 12 physics package, 14 optical system device, 16 control device, 102 right-angle conical mirror, 104 optical window, 106 opening, 108 heater, 110 sample, 112 magnetic field generation device, 116 high-temperature bath, 120 thermal radiation shield, 130, 132 laser light.

## Claims

1. A slow atomic beam generation device, comprising:
a high-temperature bath that includes an atom source, an optical window which is provided at one end and through which laser light is allowed to pass, and a right-angle conical mirror that is provided at another end, has an opening at an apex, and reflects, toward the one end, the laser light having entered through the optical window, by a portion other than the opening;
a heater that generates atomic gas in the high-temperature bath from the atom source, by heating the high-temperature bath;
a magnetic field generation device that generates a magnetic field in an area where the laser light reflected by the right-angle conical mirror intersects; and
a thermal radiation shield that covers the portion of the high-temperature bath other than the opening,
wherein the slow atomic beam generation device forms an atomic beam from the atomic gas through use of a magneto-optical trap realized by the laser light and the magnetic field, and emits the atomic beam through the opening to an outside.

2. The slow atomic beam generation device according to claim 1,
wherein the atom source is strontium.

3. The slow atomic beam generation device according to claim 1,
wherein the atom source is ytterbium.

4. The slow atomic beam generation device according to claim 1,
wherein the magnetic field generation device is disposed in a space enclosed by the thermal radiation shield.

5. The slow atomic beam generation device according to claim 1,
wherein the magnetic field generation device is disposed outside of a space enclosed by the thermal radiation shield.

6. The slow atomic beam generation device according to claim 1, further comprising
a cold filter optical window provided on an optical path of the laser light entering the optical window, between the optical window and the right-angle conical mirror.

7. The slow atomic beam generation device according to claim 1,
wherein the coil serves as both the magnetic field generation device and the heater.

8. The slow atomic beam generation device according to claim 7, further comprising
a control device that generates a magnetic field for realizing the magneto-optical trap from the coil, and generates heat for heating the high-temperature bath from the coil, by controlling a current flowing through the coil.

9. The slow atomic beam generation device according to claim 1,
wherein the magnetic field generation device is a permanent magnet that has a cylindrical shape covering the high-temperature bath, and is magnetized in a radial direction.

10. The slow atomic beam generation device according to claim 1,
wherein the magnetic field generation device is an antisymmetric winding tetracoil that forms an antisymmetric current distribution with respect to a center point.

11. The slow atomic beam generation device according to claim 1, further comprising
a control device,
wherein the high-temperature bath has a 2n-axis-symmetric shape (n is an integer of two or greater),
the magnetic field generation device is 2n (n is an integer of two or greater) rectangular-shaped or saddle-shaped coils that have an identical shape and are provided on side surfaces enclosing 2n rotationally symmetric axes of the high-temperature bath, and
the control device generates a two-dimensional quadrupole magnetic field from the magnetic field generation device, by flowing currents of coils which face each other and between which the 2n rotationally symmetric axes intervene, in directions opposite to each other.

12. The slow atomic beam generation device according to claim 1,
wherein the high-temperature bath has a 2n-axis-symmetric shape (n is an integer of two or greater),
the magnetic field generation device is 2n (n is an integer of two or greater) quadrangular prism-shaped or arc prism-shaped permanent magnets that have an identical shape and are provided on side surfaces enclosing 2n rotationally symmetric axes of the high-temperature bath, and
the permanent magnets are magnetized in angular directions with respect to the symmetric axes, and
magnetization directions of the permanent magnets facing each other with intervention of the 2n rotationally symmetric axes are opposite to each other, forming a two-dimensional quadrupole magnetic field.

13. The slow atomic beam generation device according to claim 1, further comprising
a detachable vacuum-tight window,
wherein the vacuum-tight window is detached, and the atom source is installed in the high-temperature bath, or the atom source is taken out from the high-temperature bath.

14. The slow atomic beam generation device according to claim 1,
wherein the high-temperature bath and the right-angle conical mirror are made of aluminum, a metal coated with aluminum, or an insulator coated with aluminum.

15. The slow atomic beam generation device according to claim 1,
wherein the high-temperature bath and the right-angle conical mirror are made of silver, a metal coated with silver, or an insulator coated with silver.

16. The slow atomic beam generation device according to claim 1,
wherein the high-temperature bath and the right-angle conical mirror are made of glass coated with an optical multi-layer film.

17. The slow atomic beam generation device according to claim 1,
wherein the optical window is made of sapphire.

18. A physics package, comprising:
the slow atomic beam generation device according to claim 1; and
a vacuum chamber that encloses a clock transition space where atoms are arranged.

19. A physics package for an optical lattice clock, comprising the physics package according to claim 18.

20. A physics package for an atomic clock, comprising the physics package according to claim 18.

21. A physics package for an atom interferometer, comprising the physics package according to claim 18.

22. A physics package for a quantum information processing device for atoms or ionized atoms, the physics package comprising the physics package according to claim 18.

23. A physics package system, comprising:
the physics package according to claim 18; and
a control device that controls operation of the physics package.
